(19) Europäisches Patentamt
European Patent Office
Office européen des brevets

(11) **EP 3 252 990 A1**

(12) **EUROPÄISCHE PATENTANMELDUNG**

(43) Veröffentlichungstag:
**06.12.2017 Patentblatt 2017/49**

(51) Int Cl.:
*H04L 9/08* (2006.01)  *H04L 29/06* (2006.01)
*H04W 4/00* (2009.01)  *H04L 29/08* (2006.01)
*H04W 12/04* (2009.01)  *H04W 12/06* (2009.01)

(21) Anmeldenummer: **16172887.8**

(22) Anmeldetag: **03.06.2016**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Falk, Rainer**
  **85586 Poing (DE)**
• **Fries, Steffen**
  **85598 Baldham (DE)**

(54) **VERFAHREN UND VORRICHTUNG ZUM BEREITSTELLEN EINES GEHEIMNISSES ZUM AUTHENTISIEREN EINES SYSTEMS UND/ODER KOMPONENTEN DES SYSTEMS**

(57)    Die Erfindung betrifft ein Verfahren zum Bereitstellen eines rekonstruierten Geheimnisses in Form einer Zeichenkette zum rechnergestützten Authentisieren eines technischen Systems und/oder von Komponenten des technischen Systems. Das Verfahren umfasst einen Verfahrensschritte zum Übermitteln (150) von mehreren Teilinformationen der Zeichenkette an ein Sicherheitsmodul, wobei die mehreren Teilinformationen in Form jeweils einer Teilinformation durch jeweils eine der Komponenten des technischen Systems übermittelt werden, und wobei dem Sicherheitsmodul ein vordefiniertes Kriterium zum Berechnen der Zeichenkette bekannt ist. Das Verfahren umfasst einen weiteren Verfahrensschritt zum Rekonstruieren der Zeichenkette durch das Sicherheitsmodul anhand der mehrerer Teilinformationen und des vordefinierten Kriteriums. Das Verfahren umfasst einen weiteren Verfahrensschritt Bereitstellen (170) der rekonstruierten Zeichenkette durch das Sicherheitsmodul.

FIG 2

**Beschreibung**

Die Erfindung bezieht sich auf ein Verfahren und eine Vorrichtung zum Bereitstellen einer kryptographischen Information.

Es besteht ein Bedarf, um mit IT-Security-Mechanismen Produkte, beispielsweise Geräte, Gerätekomponenten oder Softwarekomponenten, vor Manipulationen und/oder einem Reverse Engineering zu schützen. Kryptographische IT-Security-Mechanismen sind bereits seit einigen Jahren bekannt und werden beispielsweise in Smart Devices, beispielsweise in Geräten des Internets der Dinge, von cyberphysikalischen Systemen, von Automatisierungssystemen der Energietechnik oder von Fertigungssystemen, der Betriebstechnik. Diese IT-Security-Mechanismen zielen auf eine Integrität des Systems und/oder Kommunikation, Authentizität und Vertraulichkeit von übertragenen Daten oder gespeicherten Daten. Diese konventionellen IT-Security-Mechanismen sind dahingehend nachteilig, dass diese ein komplexes Schlüsselmanagement erfordern und/oder mit einem hohen administrativen Aufwand verbunden sind.

Aus dem Stand der Technik sind das Dokument US 8,531,247 B2, das Dokument US 8,892,616 B2, das Dokument US 8,300,811 B2, das Dokument US 9,147,088 B2, das Dokument EP 2 605 445 B1, das Dokument EP 2 870 565 A1, das Dokument EP 2 891 102 A1 und das Dokument US 8 843 761 B2 bekannt.

Eine Aufgabe der vorliegenden Erfindung ist es, ein Verfahren und eine Vorrichtung bereitzustellen, die es erlauben, ein Geheimnis zum Authentisieren eines Systems und/oder Komponenten des Systems auf einfache und sichere Weise bereitzustellen.

Die Aufgabe wird durch die in den unabhängigen Ansprüchen angegebenen Merkmale gelöst. In den Unteransprüchen sind vorteilhafte Weiterbildungen der Erfindung dargestellt.

Gemäß einem ersten Aspekt betrifft die Erfindung ein Verfahren zur Konfiguration von Komponenten eines technischen Systems mit den Verfahrensschritten:

- Bereitstellen eines Geheimnisses in Form einer Zeichenkette, wobei mittels der Zeichenkette eine Authentisierung der Komponenten durchführbar ist;
- Bereitstellen von mehreren Teilinformationen der Zeichenkette anhand einer Berechnungsvorschrift, wobei

  - die jeweiligen mehreren Teilinformationen anhand eines jeweiligen Teils der Zeichenkette ermittelt werden, und
  - anhand der mehrerer Teilinformationen und eines vordefinierten Kriteriums die Zeichenkette rekonstruierbar ist;

- Übertragen jeweils einer der mehreren Teilinformationen an jeweils eine der Komponenten, wobei die jeweilige Komponente die Teilinformation speichert.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung.

Unter einem "ersten Kommunikationspartner" kann im Zusammenhang mit der Erfindung beispielsweise ein Server verstanden werden, gegenüber dem sich die Komponenten oder das technische System authentisieren.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitaler Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, des Sicherheitsmoduls, oder anderer Aspekte und Teilaspekte der Erfindung implementiert.

Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren.

Unter einer "Berechnungsvorschrift" kann im Zusammenhang mit der Erfindung beispielsweise ein Aufteilen des Geheimnisses bzw. der Zeichenkette in (mehrere) Teilinformationen verstanden werden. Eine Berechnungsvorschrift kann insbesondere angeben, wie das Geheimnis auf die Teilinformationen verteilt wird. Es ist beispielsweise möglich, dass das Geheimnis beispielsweise anhand einer vordefinierten Regel in unterschiedlich große Teile zerlegt wird und diese unterschiedlich großen Teile insbesondere in den Teilinformationen enthalten sind. Die Berechnungsvorschrift kann beispielsweise auch festlegen, dass insbesondere nur ein Teil der Teilinformationen notwendig ist, um das Geheimnis aus den Teilinformationen zu berechnen. Mit anderen Worten ist damit insbesondere das Geheimnis anhand eines unvollständigen Geheimnisses berechenbar. Mittels einer Berechnungsvorschrift kann beispielsweise ein Anteil des Geheimnisses auch redundant auf mindestens zwei Teilinformationen aufgeteilt werden. Insbesondere bei einer redundanten Aufteilung eines Geheimnisses umfassen die entsprechenden Teilinformationen ganz oder teilweise den gleichen Anteil an dem Geheimnis.

Unter einem "technischen System" kann im Zusammenhang mit der Erfindung beispielsweise ein Gerät, insbesondere ein Feldgerät, ein Steuergerät oder ein Generator, oder eine Anlage, insbesondere eine Windkraftanlage, eine Fertigungsanlage oder ein Wasserkraftwerk, verstanden werden.

Unter einem "Geheimnis", insbesondere auch als ein "Geheimnis in Form einer Zeichenkette" oder als "Zeichenkette" bezeichnet, kann im Zusammenhang mit der Erfindung beispielsweise eine Lizenzinformation, ein kryptographischer Schlüssel, insbesondere ein symmetrischer Schlüssel oder ein privater Schlüssel eines asymmetrischen Schlüsselpaares, verstanden werden. Unter einem "Geheimnis" kann im Zusammenhang mit der Erfindung beispielsweise auch ein Passwort für einen Zugriff auf eine Lizenzinformation oder auf einen kryptographischen Schlüssel verstanden werden. Das Geheimnis kann beispielsweise anhand einer weiteren Sicherheitsrichtlinie erzeugt werden, die beispielsweise eine Schlüssellänge oder einen Berechnungsalgorithmus für den Schlüssel angibt. Insbesondere die Ausdrücke "rekonstruiertes Geheimnis" und "rekonstruierte Zeichenkette" können im Zusammenhang mit der Erfindung gleichbedeutend verwendet werden.

Unter einer "Teilinformation" kann im Zusammenhang mit der Erfindung beispielsweise ein Anteil an dem Geheimnis verstanden werden, das vorzugsweise von einer der Komponenten des technischen Systems gespeichert wird. Ein Geheimnis in Form einer Zeichenkette kann beispielsweise auf mehrere Teilzeichenketten aufgeteilt werden, wobei insbesondere die Teilinformation die Teilzeichenkette ist oder die Teilzeichenkette umfasst. Die Teilzeichenketten der Teilinformationen können beispielsweise je nach Berechnungsvorschrift gleich lang sein oder unterschiedliche Längen aufweisen, wobei insbesondere längere Teilzeichenketten ein größerer Anteil des Geheimnisses bekannt ist als kürzeren Teilzeichenketten. Insbesondere unter "mehreren Teilinformationen" können im Zusammenhang mit der Erfindung beispielsweise mindestens zwei Teilinformationen, mindestens drei Teilinformationen, mindestens vier Teilinformationen oder mindestens fünf Teilinformationen verstanden werden, wobei die jeweiligen Teilinformationen einen Anteil des Geheimnisses umfassen. Die jeweilige Teilinformation ist vorzugsweise sicherheitsgeschützt in der jeweiligen Komponente gespeichert. Insbesondere ist die jeweilige Teilinformation vorzugsweise nach einem Abschluss der Konfiguration jeweils nur einer Komponente bekannt oder jeweils nur den Komponenten bekannt, welche die Teilinformation redundant speichern. Darüber hinaus werden insbesondere die jeweiligen der mehreren Teilinformationen durch die jeweilige Komponente vorzugsweise nur an vertrauenswürdige Module, beispielsweise dem Sicherheitsmodul, übermittelt, sodass das Geheimnis insbesondere durch das vertrauenswürdige Modul rekonstruiert werden kann.

Unter "sicherheitsgeschützt" kann im Zusammenhang mit der Erfindung beispielsweise verstanden werden, dass insbesondere nur lesend auf eine sicherheitsgeschützte Komponente oder Speichereinheit zugegriffen werden kann oder dass insbesondere nur eine bestimmte Komponente oder bestimmte Komponenten zugreifen können. Hierzu können beispielsweise die entsprechenden sicherheitsgeschützten Komponenten Schutzmodule oder Versiegelungen aufweisen.

Unter einer "Komponente" kann im Zusammenhang mit der Erfindung beispielsweise eine Baugruppe, eine Softwarekomponente oder eine Hardwarekomponente eines Gerätes, insbesondere ein BIOS-Controller einer Hauptplatine, ein Sensor, ein Datenspeicher oder eine Netzwerkkarte, verstanden werden. Unter einer "Komponente" können im Zusammenhang mit der Beschreibung beispielsweise auch Geräte einer Anlage, beispielsweise ein Generator, ein Feldgerät oder ein Steuergerät, verstanden werden. Insbesondere handelt es sich bei den Komponenten jeweils um räumlich voneinander getrennte Komponenten, beispielsweise eine Netzwerkkarte, ein BIOS-Controller der Hauptplatine oder ein Arbeitsspeicher eines Computers.

Unter einem "Sicherheitsniveau" kann im Zusammenhang mit der Erfindung beispielsweise die Eigenschaft einer Komponente verstanden werden, die angibt wie leicht diese manipulierbar ist. Beispielsweise kann eine Softwarekomponente ein niedriges Sicherheitsniveau aufweisen, da diese leichter manipuliert werden kann. Hingegen kann beispielsweise eine Hardwarekomponente, insbesondere eine Netzwerkkomponente, ein hohes Sicherheitsniveau aufweisen, da diese beispielsweise nur durch einen direkten Zugriff durch einen Angreifer manipuliert werden kann, beispielsweise ist ein Umstecken eines Netzwerkkabels insbesondere nur vor Ort möglich.

Unter einer "Größe eines Anteils der Teilinformation" oder "Anteils der Teilinformation" und dergleichen kann im Zusammenhang mit der Erfindung beispielsweise eine Länge einer Teilzeichenkette verstanden werden, wobei sich die Teilzeichenketten insbesondere aus einem Aufteilen des Geheimnisses oder der Zeichenkette ergeben. Beispielsweise kann ein Geheimnis in Form der Zeichenkette "12345" in gleich große (also Teilzeichenketten gleicher Länge) Teilzeichenketten "1", "2", "3", "4" und "5" aufgeteilt werden. Die Teilzeichenketten können beispielsweise aber auch in unterschiedlich große Anteile der Zeichenkette aufgeteilt werden, beispielsweise in "123", "4", "5". Zum Bilden der Teilzeichenkette oder der Teilinformation, die den Anteil "123" umfasst, kann zunächst das Geheimnis in gleich große Anteile aufteilt werden und in einem nachfolgenden Verarbeitungsschritt die Anteile 1", "2", "3" zu der Teilzeichenkette "123" zusammengefasst werden, die dann als eine Teilinformation der mehreren Teilinformationen dient.

Unter einem "vordefinierten Kriterium", kann im Zusammenhang mit der Erfindung beispielsweise eine Voraussetzung verstanden werden, die erfüllt sein muss, um das Geheimnis aus mehreren Teilinformationen zu rekonstruieren. Das vordefinierte Kriterium kann beispielsweise eine Anzahl von unterschiedlichen Teilinformationen angeben, die vorzugsweise vorhanden sein müssen, um das Geheimnis zuverlässig zu rekonstruieren. Das vordefinierte Kriterium kann beispielsweise auch eine Kontextinformation oder eine Sicherheitsbedingung angeben, die vorzugsweise erfüllt sein muss, damit eine Teilinformation beispielsweise akzeptiert wird. Eine Kontextinformation oder eine Sicherheitsbedingung kann beispielsweise ein Sicherheitsniveau einer Komponente, eine Seriennummer einer Komponente, ein bestimmtes Subnetz (eines Netzwerks) oder IP-Adresse einer Komponente sein, vom dem die Teilinformation übermittelt wurde. Das vordefinierte Kriterium kann beispielsweise ein weiteres Geheimnis bilden, das vorzugsweise ausschließlich dem Sicherheitsmodul bekannt ist. Alternativ kann das vordefinierte Kriterium aber auch den Komponenten des technischen Systems bekannt sein.

Unter einer "Sicherheitsbedingung", kann im Zusammenhang mit der Erfindung beispielsweise eine vordefinierte Kontextinformation verstanden werden, die die jeweilige Komponente beispielsweise erfüllen muss, damit diese authentisiert werden kann. Dies kann beispielsweise ein Sicherheitsniveau der Komponente, eine IP-Adresse der Komponente oder eine Seriennummer der Komponente sein.

Das Verfahren ist beispielsweise dahingehend vorteilhaft, dass insbesondere durch das Verteilen der Teilinformation auf die Komponenten des technischen Systems, das Geheimnis vorzugsweise keiner Komponente vollständig bekannt ist und somit insbesondere durch einen Angreifer schwer zu berechnen ist. Das Geheimnis kann beispielsweise dazu verwendet werden, um insbesondere ein digitales Zertifikat oder eine Lizenzinformation für das technische System oder für die Komponenten zu erzeugen oder insbesondere den Zugriff auf einen privaten Schlüssel freizugeben, mit dem beispielsweise eine digitale Signatur erstellt werden kann.

Bei einer ersten Ausführungsform des Verfahrens wird jeweils eine der mehreren Teilinformationen auf mindestens zwei der Komponenten des technischen Systems redundant gespeichert.

Das Verfahren ist beispielsweise dahingehend vorteilhaft, dass bei einem Ausfall einer Komponente durch die redundant gespeicherte Teilinformation das Geheimnis durch das Sicherheitsmodul berechenbar beleibt.

Bei einer weiteren Ausführungsform des Verfahrens wird beim Breitstellen der mehreren Teilinformationen durch die Berechnungsvorschrift eine Anzahl und/oder Länge der jeweiligen Teilinformationen festlegt.

Das Verfahren ist beispielsweise dahingehend vorteilhaft, dass hierdurch die Anzahl an Teilinformationen festgelegt werden kann, die mindestens notwendig ist um das Geheimnis zu rekonstruieren.

Bei einer weiteren Ausführungsform des Verfahrens wird durch die Berechnungsvorschrift festlegt, dass die Länge eines Anteils jeweils eine der mehreren Teilinformationen an der Zeichenkette durch ein Sicherheitsniveau der Komponenten bestimmt wird, welche die Teilinformation speichern, wobei insbesondere die Länge des Anteils bei einem hohen Sicherheitsniveau länger ist.

Das Verfahren ist beispielsweise dahingehend vorteilhaft, dass die Teilinformation einer Komponente mit einem hohen Sicherheitsniveau einen größeren/längeren Anteil an dem Geheimnis umfasst. Damit lässt sich beispielsweise mit einer geringen Anzahl von Teilinformationen von Komponenten mit einem hohen Sicherheitsniveau das Geheimnis rekonstruieren.

Bei einer weiteren Ausführungsform des Verfahrens wird durch die Berechnungsvorschrift festlegt, dass die Zeichenkette zu gleichen Anteilen auf die mehreren Teilinformationen aufgeteilt.

Das Verfahren ist beispielsweise dahingehend vorteilhaft, dass durch die gleich großen Anteile eine Gewichtung oder Wichtigkeit der Komponenten verhindert wird.

Gemäß einem weiteren Aspekt betrifft die Erfindung ein Verfahren zum Bereitstellen eines rekonstruierten Geheimnisses in Form einer Zeichenkette zum rechnergestützten Authentisieren eines technischen Systems und/oder von Komponenten des technischen Systems, wobei das Verfahren nachfolgende Verfahrensschritte umfasst:

- Übermitteln von Teilinformationen des Geheimnisses an ein Sicherheitsmodul, wobei
- Übermitteln von mehreren Teilinformationen der Zeichenkette an ein Sicherheitsmodul, wobei

- die mehreren Teilinformationen in Form jeweils einer Teilinformation durch jeweils eine der Komponenten des technischen Systems übermittelt werden,
- dem Sicherheitsmodul ein vordefiniertes Kriterium zum Berechnen der Zeichenkette bekannt ist;

- Rekonstruieren der Zeichenkette durch das Sicherheitsmodul anhand der mehrerer Teilinformationen und des vordefinierten Kriteriums;
- Bereitstellen der rekonstruierten Zeichenkette durch das Sicherheitsmodul.

Das Verfahren ist beispielsweise dahingehend vorteilhaft, dass insbesondere durch das Verteilen der Teilinformation auf die Komponenten des technischen Systems, das Geheimnis vorzugsweise keiner Komponente vollständig bekannt ist und somit insbesondere durch einen Angreifer schwer zu berechnen ist. Das Geheimnis kann beispielsweise durch das Sicherheitsmodul oder durch die jeweiligen Komponenten dazu verwendet werden, um eine Authentisierungsinformation, beispielsweise ein digitales Zertifikat, eine digitale Signatur oder eine Lizenzinformation, für das technische System oder für die Komponenten zu erzeugen.

Die Authentisierungsinformation kann beispielsweise an einen ersten Kommunikationspartner übermittelt werden, der anhand der Authentisierungsinformation das technische System und/oder seine Komponenten authentisiert und/oder eine Integrität des technischen Systems und/oder seiner Komponenten bestätigt.

Die Komponenten können beispielsweise während eines Startvorgangs des technischen Systems die Teilinformationen an das Sicherheitsmodul übermitteln oder die Teilinformationen für eine spezifische Aufgabe übermitteln, wenn insbesondere ein digitales Zertifikat zur Authentisierung des technischen Systems erzeugt werden soll. Bei den übermittelten Teilinformationen handelt es sich insbesondere um voneinander verschiedene Teilinformationen zum Rekonstruieren des Geheimnisses. Vorzugsweise sind die jeweiligen Teilinformationen ausschließlich der jeweiligen Komponente bekannt und werden insbesondere nur dem Sicherheitsmodul übermittelt, um das Geheimnis signifikant besser zu schützen als es von konventionellen Systemen bekannt ist.

Bei einer weiteren Ausführungsform des Verfahrens umfasst das vordefinierte Kriterium eine vordefinierte Anzahl von Teilinformationen.

Das Verfahren ist beispielsweise dahingehend vorteilhaft, dass insbesondere nur ein Teil der Teilinformationen (also nicht alle Teilinformationen) benötigt wird, um das Geheimnis zu rekonstruieren. Dadurch wird beispielsweise eine Zeitspanne zum Übermitteln der notwendigen Teilinformationen signifikant reduziert, da insbesondere nicht alle Teilinformationen übermittelt werden müssen.

Bei einer weiteren Ausführungsform des Verfahrens wird durch das vordefinierte Kriterium eine Sicherheitsbedingung festgelegt, wobei die Zeichenkette erst dann rekonstruiert werden kann, wenn die Sicherheitsbedingung erfüllt ist.

Das Verfahren ist beispielsweise dahingehend vorteilhaft, dass insbesondere mit der Sicherheitsbedingung sichergestellt werden kann, dass das Geheimnis erst dann rekonstruierbar ist, damit insbesondere das Geheimnis ausreichend genau rekonstruiert werden kann. Hierzu kann das vordefinierte Kriterium insbesondere die Sicherheitsbedingung selbst umfassen oder einen Verweis, beispielsweise auf einen Sicherheitsserver, umfassen, der die Sicherheitsbedingung bereitstellt.

Bei einer weiteren Ausführungsform des Verfahrens wird durch die Sicherheitsbedingung festgelegt, dass die Teilinformationen einer spezifischen Komponente der Komponenten an das Sicherheitsmodul übermittelt wurde.

Das Verfahren ist beispielsweise dahingehend vorteilhaft, dass insbesondere nur Teilinformationen von Komponenten für das Rekonstruieren des Geheimnisses berücksichtigt werden, die durch eine Komponente mit einem hohen Sicherheitsniveau übermittelt wurden. Insbesondere wird die Sicherheit des Verfahrens hierdurch signifikant verbessert, da beispielsweise nur Teilinformationen von schwer manipulierbaren Komponenten berücksichtigt werden.

Bei einer weiteren Ausführungsform des Verfahrens wird durch das Sicherheitsmodul mittels eines Kryptomoduls eine Korrektheit der rekonstruierten Zeichenkette festgestellt.

Das Verfahren ist beispielsweise dahingehend vorteilhaft, dass insbesondere überprüfbar ist, ob das Geheimnis korrekt rekonstruiert wurde. Hierzu kann beispielsweise das Sicherheitsmodul das rekonstruierte Geheimnis an das Kryptomodul übergeben und das Kryptomodul bestätigt vorzugsweise die Korrektheit und/oder die Integrität des rekonstruierten Geheimnisses/Zeichenkette. Um die Korrektheit festzustellen, umfasst das Kryptomodul vorzugsweise eine sicherheitsgeschützte Speichereinheit mit dem Geheimnis, die insbesondere ausschließlich das Kryptomodul selbst auslesen kann. Die sicherheitsgeschützte Speichereinheit selbst kann beispielsweise nur während der Fertigung oder während eines Wartungsmodus des Kryptomoduls einem Geheimnis konfiguriert werden. Ein Servicetechniker kann beispielsweise das Kryptomodul während Wartungsarbeiten austauschen oder sich mittels eines digitalen Zertifikates authentisieren, um das Kryptomodul mit einem neuen Geheimnis zu konfigurieren.

Bei einer weiteren Ausführungsform des Verfahrens umfassen die Teilinformationen jeweils eine Zuordnungsinformation zum Rekonstruieren des Geheimnisses.

Das Verfahren ist beispielsweise dahingehend vorteilhaft, dass insbesondere mit der Zuordnungsinformation das Geheimnis signifikant leichter rekonstruiert werden kann. Die Zuordnungsinformation kann beispielsweise angeben, an welcher Stelle jeweils eine der Teilinformationen relativ zu den anderen Teilinformationen in der zu rekonstruierenden Zeichenkette des Geheimnisses einzufügen ist. Bei einem Geheimnis in Form der Zeichenkette "123", kann die Zuordnungsinformation beispielsweise für eine Teilinformation mit "3" angeben, sodass insbesondere bei der Rekonstruktion klar ist, dass es sich um das dritte Element/dritte Teilinformation des Geheimnisses handelt.

Bei einer weiteren Ausführungsform des Verfahrens wird das rekonstruierte Geheimnis den Komponenten bereitgestellt, die eine der Teilinformationen bereitgestellt haben.

Das Verfahren ist beispielsweise dahingehend vorteilhaft, dass insbesondere nur Komponenten das Geheimnis bekannt gemacht wird, die zumindest über eine der Teilinformationen verfügen. Hierdurch wird insbesondere die Sicherheit des Verfahrens signifikant erhöht, da nur die Komponenten, die beispielsweise eine Teilinformation übermittelt haben, das rekonstruierte Geheimnis bereitgestellt wird. Komponenten des technischen Systems, die über keine Teilinformation verfügen, sind beispielsweise nicht berechtigt das Geheimnis zu kennen. Mit dem Verfahren wird insbesondere sichergestellt, dass diese Komponenten keinen Zugriff auf das Geheimnis erhalten. Die Komponenten, denen das Geheimnis bereitgestellt wird, können damit beispielsweise ein digitales Zertifikat erstellen, sodass diese Komponenten authentisiert werden können.

Bei einer weiteren Ausführungsform des Verfahrens werden jeweils die Teilinformationen durch die jeweiligen Komponenten als Anfrage zum Bereitstellen des Geheimnisses durch das Sicherheitsmodul übermittelt.

Das Verfahren ist beispielsweise dahingehend vorteilhaft, dass insbesondere die Teilinformation auf einfache Weise dem Sicherheitsmodul übermittelt wird und damit beispielsweise zusätzliche Informationen über die jeweilige Komponente, beispielsweise eine Kontextinformation, dem Sicherheitsmodul übermittelt werden kann.

Gemäß einem weiteren Aspekt betrifft die Erfindung eine Komponente, aufweisend:

- eine erste Speichereinheit zum Speichern einer jeweiligen Teilinformation von mehreren Teilinformationen eines Geheimnisses im Form einer Zeichenkette, wobei

    - die jeweilige der Teilinformationen anhand eines Teils der Zeichenkette ermittelbar ist,
    - die Zeichenkette anhand der mehreren Teilinformationen von weiteren Komponenten und eines vordefinierten Kriteriums rekonstruierbar ist,
    - mittels der Zeichenkette eine Authentisierung der Komponente und/oder eines technisches Systems, das die Komponente aufweist, durchführbar ist;

- ein erstes Kommunikationsmodul zum Senden einer Anfrage zum Bereitstellen der Zeichenkette, wobei die Anfrage die jeweilige Teilinformation der Komponente umfasst.

Insbesondere kann die Komponente die Anfrage an ein Sicherheitsmodul, so wie es bereits weiter oben erwähnt wurde, übermitteln, sodass vorzugsweise das Sicherheitsmodul ein rekonstruiertes Geheimnis bereitstellen kann.

Gemäß einem weiteren Aspekt betrifft die Erfindung ein Sicherheitsmodul zum rekonstruieren eines Geheimnisses in Form einer Zeichenkette zum rechnergestützten Authentisieren eines technischen Systems und/oder von Komponenten des technischen Systems, aufweisend:

- ein zweites Kommunikationsmodul zum Empfangen von mehreren Teilinformationen der Zeichenkette, wobei die jeweiligen Teilinformationen durch jeweils eine der Komponenten des technischen Systems übermittelbar sind,
- eine zweite Speichereinheit zum Speichern eines vordefinierten Kriteriums (t) über die mehreren Teilinformationen der Zeichenkette;
- ein erstes Rekonstruktionsmodul zum Rekonstruieren der Zeichenkette anhand der mehrerer Teilinformationen und des vordefinierten Kriteriums;
- ein erstes Bereitstellungsmodul zum Bereitstellen der rekonstruierten Zeichenkette.

Bei einer weiteren Ausführungsform des Sicherheitsmoduls umfasst das Sicherheitsmodul zumindest ein weiteres Modul zur Durchführung des erfindungsgemäßen Verfahrens zur Rekonstruktion des Geheimnisses in Form einer Zeichenkette.

Weitere Module können beispielsweise ein weiteres Festlegemodul zum Festlegen der Sicherheitsbedingung, ein Feststellungsmodul zum Feststellen der Korrektheit der Rekonstruierten und dergleichen.

Gemäß einem weiteren Aspekt betrifft die Erfindung eine Konfigurationsvorrichtung zum Konfigurieren einer Komponente eines technischen Systems, aufweisend:

- ein zweites Bereitstellungsmodul zum Bereitstellen eines Geheimnisses in Form einer Zeichenkette, wobei mittels der Zeichenkette eine Authentisierung der Komponenten durchführbar ist;
- ein drittes Bereitstellungsmodul zum Bereitstellen von mehreren Teilinformationen der Zeichenkette anhand einer Berechnungsvorschrift, wobei

  - die jeweiligen mehreren Teilinformationen anhand eines jeweiligen Teils der Zeichenkette ermittelt werden, und
  - anhand der mehrerer Teilinformationen und eines vordefinierten Kriteriums die Zeichenkette rekonstruierbar ist;

- ein drittes Kommunikationsmodul zum Übertragen jeweils einer der mehreren Teilinformationen an jeweils eine der Komponenten, wobei die jeweilige Komponente die Teilinformation speichert.

Gemäß einem weiteren Aspekt betrifft die Erfindung ein Verfahren zum Authentifizieren von Komponenten eines technischen Systems durch einen ersten Kommunikationspartner mit den Verfahrensschritten:

- Festlegen einer Authentisierungsrichtlinie für eine Komponente der Komponenten, wobei die Authentisierungsrichtlinie eine Anzahl der Komponenten des technischen Systems bestimmt, die jeweils eine Authentisierungsanforderung an den ersten Kommunikationspartner zu übermitteln haben, damit eine positive Authentizität durch den ersten Kommunikationspartner bestätigt wird;
- Empfangen einer Authentisierungsanfrage für die Komponente durch den ersten Kommunikationspartner, wobei die Authentisierungsanfrage von der Komponente erzeugt wurde;
- Authentifizieren der Komponente, wenn die Authentisierungsrichtlinie erfüllt ist.

Das Verfahren ist beispielsweise dahingehend vorteilhaft, da insbesondere auf signifikant einfache Weise eine Gruppe von Komponenten authentisiert werden können, ohne beispielsweise die Komponente selbst für eine Authentisierung zu konfigurieren. Es ist beispielsweise auch möglich, dass die Authentisierungsrichtlinie eine weitere Sicherheitsbedingung angibt, die erfüllt sein muss, bevor die Gruppe der Komponenten durch den ersten Kommunikationspartner authentifiziert werden kann.

Bei einer weiteren Ausführungsform des Verfahrens wird eine rekonstruierte Zeichenkette dem erfindungsgemäßen Verfahren bereitgestellt, wobei die rekonstruierte Zeichenkette zum Erzeugen der Authentisierungsanfrage verwendet wird.

Gemäß einem weiteren Aspekt betrifft die Erfindung ein Authentifizierungssystem zum Authentifizieren von Komponenten eines technischen Systems, aufweisend:

- ein erstes Festlegemodul zum Festlegen einer Authentisierungsrichtlinie für eine Komponente der Komponenten, wobei die Authentisierungsrichtlinie eine Anzahl der Komponenten des technischen Systems bestimmt, die jeweils eine Authentisierungsanforderung an den ersten Kommunikationspartner zu übermitteln haben, damit eine positive Authentizität durch den ersten Kommunikationspartner bestätigt wird;
- ein viertes Kommunikationsmodul zum Empfangen einer Authentisierungsanfrage für die Komponente durch den ersten Kommunikationspartner, wobei die Authentisierungsanfrage von der Komponente erzeugt wurde;
- ein erstes Authentifizierungsmodul zum Authentisieren der Komponente, wenn die Authentisierungsrichtlinie erfüllt ist.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker oder ein zur Erstellung von Prozessoren und/oder Geräten, beansprucht, wobei das Erstellungsgerät mit den Programmbefehlen derart konfiguriert wird, dass das genannte erfindungsgemäße Sicherheitsmodul und/oder die Konfigurationsvorrichtung und/oder die Komponente und/oder Authentifizierungssystem erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das Sicherheitsmodul und/oder die Konfigurationsvorrichtung und/oder die Komponente und/oder Authentifizierungssystem erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:

Fig. 1A    ein Ablaufdiagramm eines ersten Ausführungsbeispiels des erfindungsgemäßen Verfahrens zur Konfiguration von Komponenten eines technischen Systems;

Fig. 1B    ein Ablaufdiagramm eines zweiten Ausführungsbeispiels des erfindungsgemäßen Verfahrens zum Bereitstellen eines rekonstruierten Geheimnisses in Form einer Zeichenkette zum rechnergestützten Authentisieren eines technischen Systems und/oder von Komponenten des technischen Systems;

Fig. 2    eine Berechnung von mehreren Teilinformationen für das erste Ausführungsbeispiel und für das zweite Ausführungsbeispiel;

Fig. 3    eine Komponente eines drittes Ausführungsbeispiels der Erfindung;

Fig. 4    ein Sicherheitsmodul eines viertes Ausführungsbeispiels der Erfindung;

Fig. 5    eine Konfigurationsvorrichtung eines fünften Ausführungsbeispiels der Erfindung;

Fig. 6    ein Ablaufdiagramm eines sechsten Ausführungsbeispiels des erfindungsgemäßen Verfahrens zum authentifizieren von Komponenten eines technischen Systems durch einen ersten Kommunikationspartner;

Fig. 7    ein Ablaufdiagramm eines siebten Ausführungsbeispiels des erfindungsgemäßen Verfahrens zum Authentifizieren von Komponenten eines technischen Systems durch einen ersten Kommunikationspartner;

Fig. 8    ein Authentifizierungssystem eines achten Ausführungsbeispiels der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinrichtung auf, um das Verfahren zu implementieren oder auszuführen.

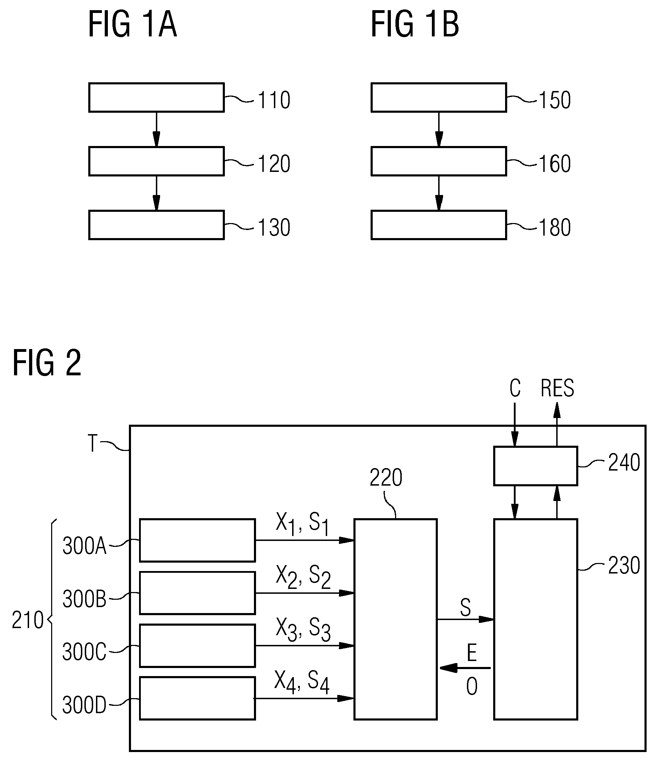

Die Fig. 1A zeigt ein Ablaufdiagramm eines ersten Ausführungsbeispiels des erfindungsgemäßen Verfahrens zur Konfiguration von Komponenten eines technischen Systems.

Im Einzelnen zeigt Fig. 1A ein Verfahren mit dem die Komponenten des technischen Systems aus dem Verfahren aus Fig. 1B konfiguriert werden können.

Das Verfahren umfasst einen ersten Verfahrensschritt zum Bereitstellen 110 eines Geheimnisses in Form einer Zeichenkette, wobei mittels der Zeichenkette eine Authentisierung der Komponenten durchführbar ist.

Desweiteren umfasst das Verfahren einen zweiten Verfahrensschritt zum Bereitstellen 120 von mehreren Teilinformationen der Zeichenkette anhand einer Berechnungsvorschrift, wobei die jeweiligen mehreren Teilinformationen anhand eines jeweiligen Teils der Zeichenkette ermittelt werden, und wobei anhand der mehrerer Teilinformationen und eines vordefinierten Kriteriums die Zeichenkette rekonstruierbar ist.

Desweiteren umfasst das Verfahren einen dritten Verfahrensschritt zum Übertragen 130 jeweils einer der mehreren Teilinformationen an jeweils eine der Komponenten, wobei die jeweilige Komponente die Teilinformation speichert.

Die Fig. 1B zeigt ein Verfahren mit dem das Geheimnis in Form einer Zeichenkette anhand der Teilinformationen der Komponenten rekonstruiert wird.

Im Einzelnen zeigt die Fig. 1B ein Ablaufdiagramm eines zweiten Ausführungsbeispiels des erfindungsgemäßen Verfahrens zum Bereitstellen eines rekonstruierten Geheimnisses in Form einer Zeichenkette zum rechnergestützten Authentisieren eines technischen Systems und/oder von Komponenten (entsprechend Fig. 1A) des technischen Systems. Das technische System T kann beispielsweise einen Prozessor, eine Speichereinheit, ein Eingabegerät, insbesondere eine Computertastatur oder eine Computermaus, und einen Monitor umfassen.

Das Verfahren umfasst einen ersten Verfahrensschritt zum Übermitteln 150 von mehreren Teilinformationen der Zeichenkette an ein Sicherheitsmodul, wobei die mehreren Teilinformationen in Form jeweils einer Teilinformation durch jeweils eine der Komponenten des technischen Systems übermittelt werden, und wobei dem Sicherheitsmodul ein vordefiniertes Kriterium zum Berechnen der Zeichenkette bekannt ist.

Desweiteren umfasst das Verfahren einen zweiten Verfahrensschritt zum Rekonstruieren 160 der Zeichenkette durch das Sicherheitsmodul anhand der mehrerer Teilinformationen und des vordefinierten Kriteriums.

Desweiteren umfasst das Verfahren einen dritten Verfahrensschritt zum Bereitstellen 170 der rekonstruierten Zeichenkette durch das Sicherheitsmodul.

Die Fig. 1A zeigt somit insbesondere den erfinderischen Aspekt aus Sicht der Komponente bei deren Konfiguration mit der jeweiligen Teilinformation und die Fig. 1B zeigt insbesondere den erfinderischen Aspekt, wenn die Zeichenkette anhand der Teilinformationen der Komponenten rekonstruiert wird, um beispielsweise ein digitales Zertifikat zu erstellen.

Mit den Verfahren insbesondere aus Fig. 1B ist es beispielsweise möglich, dass sich die Komponenten, beispielsweise mehrere unterschiedliche Windturbinen eines Windparks, oder das technische System, beispielsweise der Windpark selbst, mittels der rekonstruierten Zeichenkette gegenüber einem ersten Kommunikationspartner, beispielsweise ein Umspannungswerk eines Stromerzeugers, authentisiert. Hierzu kann das technische System mittels des Sicherheitsmoduls die Zeichenkette rekonstruieren, beispielsweise eine rekonstruierte Zeichenkette in Form eines privaten Schlüssels zum Erzeugen einer digitalen Signatur. Das dem privaten Schlüssel zugeordnete digitale Zertifikat wird insbesondere als Teil einer Authentisierungsanfrage an den ersten Kommunikationspartner übermittelt. Kann die Authentizität des digitalen Zertifikats durch den ersten Kommunikationspartner, insbesondere mittels eines öffentlichen Schlüssels, der dem privaten Schlüssel zugeordnet ist, bestätigt werden, so authentifiziert der erste Kommunikationspartner das technische System oder die Komponenten des technischen Systems. Kann die Authentizität des digitalen Zertifikats nicht bestätigt werden, so wird eine Authentifizierung durch den ersten Kommunikationspartner verwehrt.

Eine Möglichkeit, wie die mehreren Teilinformationen für die Zeichenkette berechnet werden können und wie die Zeichenkette wieder rekonstruiert werden kann, ist beispielsweise in Fig. 2 dargestellt.

Zunächst wird eine Komponente, wie in Fig. 1A erläutert, konfiguriert. Hierzu wird zunächst ein Geheimnis s in Form einer Zeichenkette mittels eines Verfahrens der Geheimnisteilung (engl. Secret-Sharing) zerlegt und als Teilinformationen abgespeichert. Bei dem Geheimnis s kann es sich um einen privaten Schlüsseln eines Schlüsselpaar eines asymmetrischen kryptographischen Verfahrens handeln, bei welchem dem privaten Schlüssel ein öffentlicher Schlüssel zugeordnet ist, wobei mit dem privaten Schlüssel beispielsweise ein digitales Zertifikat (beispielsweise im Falle einer zertifikatsaustellenden Komponente - CA) oder eine digitale Signatur (beispielsweise im Falle einer Komponente) erstellbar ist und mit dem öffentlichen Schlüssel eine Authentizität des digitalen Zertifikats (beispielsweise im Falle des öffentlichen Schlüssels der zertifikatsaustellenden Komponente) oder der digitalen Signatur (beispielsweise im Falle des öffentlichen Schlüssels einer Komponente) feststellbar ist. Der öffentliche Schlüssel wird vorzugsweise dem ersten Kommunikationspartner bekannt gemacht. Dies kann beispielsweise mittels eines weiteren digitalen Zertifikats, beispielsweise einem X.509 Zertifikat, oder manuell durch einen Wartungstechniker bei einer Wartung des ersten Kommunikationspartners geschehen.

Das Übermitteln des öffentlichen Schlüssels kann beispielsweise auch durch das technische System T selbst oder dem Sicherheitsmodul des technischen Systems T oder einem Kryptomodul 230 des technischen Systems T erfolgen. Zusammen mit dem öffentlichen Schlüssel können noch Kontextinformationen über das technische System T oder seine Komponenten 210 übermittelt werden, die beispielsweise anhand einer Sicherheitsbedingung abgefragt werden können. Dies kann beispielsweise eine Seriennummer oder eine MAC-Adresse der jeweiligen Komponente sein, die beispielsweise während des Betriebs des technischen Systems T unverändert bleiben sollen.

Mit dem Verfahren zur Geheimnisteilung, beispielsweise das Verfahren zur Geheimnisteilung nach Shamir, werden anhand des Geheimnisses s mehrere Teilinformationen, beispielsweise eine erste Teilinformation $x_1, s_1$, eine zweite Teilinformation $x_2$, $s_2$, eine dritte Teilinformation $x_3, s_3$ und eine vierte Teilinformation $x_4, s_4$, berechnet, wobei jeweils eine der Teilinformationen dann jeweils auf unterschiedlichen Komponenten 210, beispielsweise eine erste Komponente 300A, eine zweite Komponente 300B, eine dritte Komponente 300C und eine vierte Komponente 300D, des technischen Systems T gespeichert werden. Sollen beispielsweise Teilinformationen unterschiedlicher Länge jeweils auf den Komponenten 210 gespeichert werden, so können beispielsweise zwei Teilinformationen zu einer Teilinformation für eine Komponente, beispielsweise eine Komponente mit einem hohen Sicherheitsniveau, insbesondere die erste Komponente 300A, zusammengefasst werden.

Vorzugsweise verlässt das (rekonstruierte) Geheimnis s niemals das technische System T oder es wird durch das Sicherheitsmodul 220 nur für eine bestimmte Aufgabe, beispielsweise zum Erstellen einer digitalen Signatur für eine Nachricht, rekonstruiert und anschließend wieder gelöscht.

Um die Zeichenkette, also das Geheimnis s, zu rekonstruieren, werden mehrere Teilinformationen benötigt und ein vordefiniertes Kriterium, das beispielsweise angibt, wie viele der mehreren Teilinformationen notwendig sind, um die Zeichenkette zu rekonstruieren.

Eine Möglichkeit hierzu ist beispielsweis das oben genannte Verfahren nach Shamir:

$$f(x) \ = \ s \ + \ a_1 x \ + \ a_2 x^2 \ + \ \ldots \ + \ {}_{at-1} x^{t-1}$$

wobei $a_i$ zufällig gewählte Parameter sind, $x_i$ öffentliche Parameter sein können (beispielsweise eine Zuordnungsinformation), n eine Anzahl von Teilinformationen, die anhand des Geheimnis s berechnet wurden, t eine Anzahl von unterschiedlichen Teilinformationen, die benötigt werden, um das Geheimnis s zu rekonstruieren (was auch als vordefiniertes Kriterium bezeichnet werden kann).

Wird der Algorithmus von Shamir angewendet, so wird das Polynom f(x) derart gestaltet, dass die Ordnung des Polynoms t-1 ist. Es werden dann n Teilinformationen, wobei $n \geq t$ ist, anhand des Geheimnisses s berechnet, wobei das Geheimnis s in n Teile $x_i$, $s_i = f(x_i)$, (mit $x_i \neq 0$) zerlegt wird. Die sich daraus ergebenden Teilinformationen können dann entweder jeweils direkt auf den jeweiligen Komponenten 210 des technischen Systems gespeichert werden oder Teilinformationen werden beispielsweise zu einer neuen Teilinformation zusammenfasst und dann jeweils auf den jeweiligen Komponenten 210 gespeichert.

Um das Geheimnis s durch das Sicherheitsmodul 220 zu rekonstruieren wird dann beispielsweise die Lagrange Interpolation verwendet. Die Berechnung des Falles x = 0 führt zur Berechnung des konstanten Anteils des Polynoms, was dem rekonstruierten Geheimnis s entspricht.

$$s = g(0) = \sum s_i \cdot \prod_{j \neq i} \frac{-x_j}{x_i - x_j}$$

Dabei ist anzumerken, dass nicht alle n Teilinformationen zur Rekonstruktion des Geheimnisses s benötigt werden, sondern nur eine Anzahl von t unterschiedlichen Teilinformationen. Mit der Anzahl t kann beispielsweise festgelegt werden, wie viele Komponenten des Systems verfügbar sein müssen oder eine Teilinformation an das Sicherheitsmodul zu übermitteln haben, um das Geheimnis s zu rekonstruieren. Diese Information umfasst beispielsweise das vordefinierte Kriterium.

Andere bekannte Verfahren die anstelle des Verfahren vom Shamir verwendet werden können ist das Verfahren Blakley oder ein Verfahren zum Geheimnisteilen, das den chinesischen Restsatz verwendet.

Das rekonstruierte Geheimnis kann dann beispielsweise zum Erstellen einer digitalen Signatur oder eines digitalen Zertifikats verwendet werden. Alternativ kann das rekonstruierte Geheimnis beispielsweise ein Passwort sein, um auf den privaten Schlüssel zuzugreifen, der beispielsweise auf dem Kryptomodul 230 gespeichert ist. Das Kryptomodul 230 kann das die Korrektheit O des Geheimnisses s bestätigen oder einen Fehler E zurückliefern, der beispielsweise angibt, dass das Geheimnis s inkorrekt rekonstruiert wurde.

Ist das Geheimnis s erfolgreich rekonstruiert worden, so kann es beispielsweise verwendet werden, um eine Antwort RES auf eine Aufforderung C eines Aufforderungs-Antwortprotokolls zu berechnen und über eine erste Netzwerkschnittstelle 240 zu versenden. Die Antwort RES wird beispielsweise an den ersten Kommunikationspartner versendet, der mittels des öffentlichen Schlüssels eine Korrektheit der Antwort feststellt.

Wird das rekonstruierte Geheimnis s beispielsweise zum Erzeugen eines digitalen Zertifikats, beispielsweise ein X.509 Zertifikat, verwendet, so kann sich das technische System T oder die Komponenten 210, denen das rekonstruierte Geheimnis s bereit gestellt wurde, gegenüber dem ersten Kommunikationspartner authentisieren.

In einer Variante kann das X.509 Zertifikat eine Erweiterung enthalten, die das vordefinierte Kriterium und/oder die Kontextinformationen und/oder den öffentlichen Schlüssel zum Prüfen des digitalen Zertifikats enthalten. Das digitale Zertifikat muss dann beispielsweise mit dem öffentlichen Schlüssel einer zertifikatsaustellenden Komponente verifizierbar sein, damit durch die digitale Signatur mit dem korrespondierenden privaten Schlüssel das technische System oder die Komponenten des technischen Systems, authentifiziert werden kann.

In einer weiteren Variante kann beispielsweise durch eine Authentisierungsrichtlinie eine Sicherheitsbedingung gefordert werden, dass die Komponenten des technischen Systems und/oder das technischen System bestimmte Kontextinformationen oder Kontextanforderungen erfüllen müssen.

Durch das erfindungsgemäße Verfahren kann der erste Kommunikationspartner das technische System und/oder die Komponenten des technischen Systems authentifizieren. Darüber hinaus kann mit dem Verfahren eine Integritätsprüfung des technischen Systems durchgeführt werden, da bestimmte Komponenten oder eine definierte Anzahl an Komponenten des Systems verfügbar sein müssen, um das Geheimnis durch das Sicherheitsmodul zu rekonstruieren.

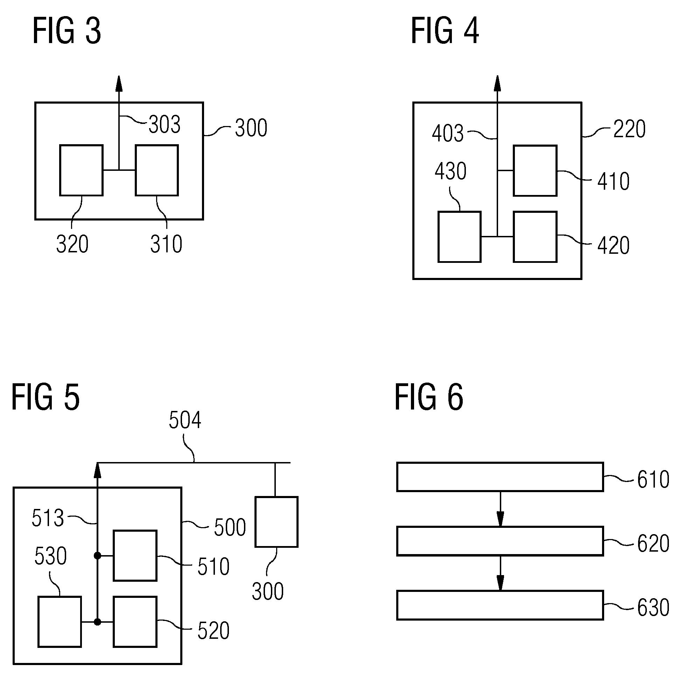

Die Fig. 3 zeigt eine Komponente eines dritten Ausführungsbeispiels der Erfindung, die beispielsweise als Komponente im ersten Ausführungsbeispiel und/oder im zweiten Ausführungsbeispiel zum Einsatz kommen kann.

Im Einzelnen zeigt die Fig. 3 eine Komponente 300, die eine erste Speichereinheit 310 und ein erstes Kommunikationsmodul 320, die über einen ersten Bus 303 miteinander kommunikativ in Verbindung stehen.

Die erste Speichereinheit 310 ist zum Speichern einer jeweiligen Teilinformation von mehreren Teilinformationen eines Geheimnisses in Form einer Zeichenkette ausgelegt, wobei die jeweilige der Teilinformationen anhand eines Teils der Zeichenkette ermittelbar ist. Die Zeichenkette ist beispielsweise anhand der mehrerer Teilinformationen von weiteren Komponenten und eines vordefinierten Kriteriums rekonstruierbar, wobei mittels der Zeichenkette eine Authentisierung der Komponente und/oder eines technisches Systems, das die Komponente aufweist, durchführbar ist.

Die mehreren Teilinformationen sind beispielsweise nach dem erfindungsgemäßen Verfahren berechnet worden, das insbesondere der Fig. 1A oder Fig. 2 erläutert wurde.

Das erste Kommunikationsmodul 320 versendet eine Anfrage zum Bereitstellen der Zeichenkette, wobei die Anfrage die jeweilige Teilinformation der Komponente umfasst.

Das erste Kommunikationsmodul 320 versendet die Anfrage beispielsweise an ein Sicherheitsmodul so wie es beispielsweise in den vorhergehenden Figuren erläutert wurde.

Die Komponente 300 kann noch weitere Module aufweisen, um spezifische Aufgaben für das technische System zu erfüllen. Diese Module können beispielsweise ein Aktuator und/oder weitere Speichereinheiten und/oder ein Analog/Digitalwandler und/oder ein Sensor und/oder weitere Schnittstellen für Netzwerke oder Kommunikationsbusse.

Die Komponente 300 kann beispielsweise zusätzlich noch einen Prozessor, eine Speichereinheit, ein Eingabegerät, insbesondere eine Computertastatur oder eine Computermaus, und einen Monitor umfassen.

Die Fig. 4 zeigt ein Sicherheitsmodul 220 eines vierten Ausführungsbeispiels der Erfindung. Das Sicherheitsmodul 220 kann beispielsweise das Sicherheitsmodul sein, das in den Ausführungsbeispielen der Fig. 1 und der Fig. 2 verwendet wird.

Im Einzelnen zeigt Fig. 4 ein Sicherheitsmodul 220 zum Rekonstruieren eines Geheimnisses in Form einer Zeichenkette zum rechnergestützten Authentisieren eines technischen Systems und/oder von Komponenten des technischen Systems. Das Sicherheitsmodul 220 umfasst ein zweites Kommunikationsmodul 410, eine zweite Speichereinheit 420, ein erstes Rekonstruktionsmodul 430 und ein erstes Bereitstellungsmodul 440, die über einen zweiten Bus 403 miteinander kommunikativ in Verbindung stehen.

Das zweite Kommunikationsmodul 410 dient zum Empfangen von mehreren Teilinformationen der Zeichenkette, wobei die jeweiligen Teilinformationen durch jeweils eine der Komponenten des technischen Systems übermittelbar sind. Die Teilinformationen können beispielsweise als Teil einer Anfrage zum Authentisieren des technischen Systems oder von Komponenten des technischen Systems, die in den Fig. 1 und 2 erläutert wurden, empfangen werden.

Mittels der zweiten Speichereinheit 420 kann ein vordefiniertes Kriterium über die mehreren Teilinformationen der Zeichenkette gespeichert werden.

Das erste Rekonstruktionsmodul 430 ist zum Rekonstruieren der Zeichenkette anhand der mehrerer Teilinformationen und des vordefinierten Kriteriums geeignet.

Das erste Bereitstellungsmodul 440 ist zum Bereitstellen der rekonstruierten Zeichenkette geeignet. Dies kann beispielsweise mittels des zweiten Kommunikationsmoduls erfolgen.

Das Sicherheitsmodul 220 kann beispielsweise zusätzlich noch einen Prozessor, eine Speichereinheit, ein Eingabegerät, insbesondere eine Computertastatur oder eine Computermaus, und einen Monitor umfassen.

Die Fig. 5 zeigt eine Konfigurationsvorrichtung eines fünften Ausführungsbeispiels der Erfindung. Die Konfigurationsvorrichtung ist insbesondere dazu geeignet, Komponenten aus den vorhergehenden Ausführungsbeispielen mit jeweils einer Teilinformation der mehreren Teilinformationen zu konfigurieren.

Im Einzelnen zeigt die Fig. 5 eine Konfigurationsvorrichtung 500 zum Konfigurieren einer Komponente 300 eines technischen Systems. Die Konfigurationsvorrichtung 500 umfasst ein zweites Bereitstellungsmodul 510, ein drittes Bereitstellungsmodul 520 und ein drittes Kommunikationsmodul 530, die über einen dritten Bus 503 kommunikativ miteinander in Verbindung stehen.

Das zweite Bereitstellungsmodul 510 ist zum Bereitstellen eines Geheimnisses in Form einer Zeichenkette geeignet, wobei mittels der Zeichenkette eine Authentisierung der Komponenten durchführbar ist.

Das dritte Bereitstellungsmodul 520 ist zum Bereitstellen von mehreren Teilinformationen der Zeichenkette anhand einer Berechnungsvorschrift geeignet, wobei die jeweiligen mehreren Teilinformationen anhand eines jeweiligen Teils der Zeichenkette ermittelt werden, und wobei anhand der mehrerer Teilinformationen und eines vordefinierten Kriteriums die Zeichenkette rekonstruierbar ist.

Das dritte Kommunikationsmodul 530 ist zum Übertragen jeweils einer der mehreren Teilinformationen an jeweils eine der Komponenten geeignet, wobei die jeweilige Komponente 300 die Teilinformation speichert. Hierzu ist die Komponente beispielsweise über ein Netzwerk 504 mit dem dritten Kommunikationsmodul 530 verbunden.

Die Konfigurationsvorrichtung 500 kann beispielsweise noch zusätzlich einen Prozessor, eine Speichereinheit, ein Eingabegerät, insbesondere eine Computertastatur oder eine Computermaus, und einen Monitor umfassen.

Die Fig. 6 zeigt ein Ablaufdiagramm eines sechsten Ausführungsbeispiels des erfindungsgemäßen Verfahrens zum Authentifizieren von Komponenten eines technischen Systems durch einen ersten Kommunikationspartner.

Im Einzelnen umfasst das Verfahren einen ersten Verfahrensschritt zum Festlegen 610 einer Authentisierungsrichtlinie für eine Komponente der Komponenten, wobei die Authentisierungsrichtlinie eine Anzahl der Komponenten des technischen Systems bestimmt, die jeweils eine Authentisierungsanforderung an den ersten Kommunikationspartner zu übermitteln haben, damit eine positive Authentizität durch den ersten Kommunikationspartner bestätigt wird.

Desweiteren umfasst das Verfahren einen zweiten Verfahrensschritt zum Empfangen 620 einer Authentisierungsanfrage für die Komponente durch den ersten Kommunikationspartner, wobei die Authentisierungsanfrage von der Komponente erzeugt wurde.

Desweiteren umfasst das Verfahren einen zweiten Verfahrensschritt zum Authentifizieren 630 der Komponente, wenn die Authentisierungsrichtlinie erfüllt ist. Die Authentisierungsrichtlinie ist insbesondere dann erfüllt, wenn eine Authentisierungsanfrage von der in der Authentisierungsrichtlinie geforderten Anzahl der Komponenten übermittelt wurde.

In einer Variante werden die Komponenten der Anzahl von Komponenten, welche die Authentisierungsanfragen geschickt haben, ebenfalls authentifiziert.

Mit anderen Worten können mittels des erfindungsgemäßen Verfahrens Kontextinformationen über die Komponenten eines technischen Systems gesammelt werden, um beispielsweise einen Grad an Vertrauenswürdigkeit der Komponenten zu bestimmen, insbesondere wenn die Komponenten eine Authentisierungsanfrage an den ersten Kommunikationspartner stellen. Diese Kontextinformationen können beispielsweise kontinuierlich oder zu bestimmten Zeitpunkten gesammelt werden, um diese beispielsweise gegen eine Sicherheitsbedingung der Authentisierungsrichtlinie durch den ersten Kommunikationspartner zu prüfen. Die Authentisierungsrichtlinie kann beispielsweise Sicherheitsbedingungen an die Kontextinformation einer Komponente stellen, um beispielsweise zu verhindern, dass eine Komponente aus einem falschen Subnetz authentifiziert wird.

In industriellen Steuersystemen oder beim Internet der Dinge kommt häufig eine Vielzahl von Feldgeräten zum Einsatz um das entsprechende technische System zu realisieren.

Mit dem erfindungsgemäßen Verfahren ist es möglich eine bestimmte Anzahl von Komponenten eines technischen Systems gegenüber einem ersten Kommunikationspartner zu authentisieren. Im Einzelnen wird die Komponente beispielsweise nur durch den ersten Kommunikationspartner als authentisch angesehen, wenn sich eine durch die Authentisierungsrichtlinie vordefinierte Anzahl von Komponenten und/oder mit der Komponente assoziierte Komponenten des technischen Systems ebenfalls eine Authentisierungsanfrage für sich beim ersten Kommunikationspartner gestellt haben. Der erste Kommunikationspartner authentifiziert dann die Komponenten, wenn die Anforderungen der Sicherheitsrichtlinie erfüllt sind, beispielsweise die Kontextinformationen der Komponenten, die Anzahl der Komponenten usw.

In einer Variante wird den Komponenten jeweils ein Sicherheitsniveau zugeordnet um beispielsweise zwischen unbedingt erforderlichen Komponenten und optionalen Komponenten des technischen Systems zu differenzieren. Auch kann die Authentisierungsrichtlinie fordern, dass beispielsweise eine bestimmte Anzahl von Komponenten mit einem bestimmten Sicherheitsniveau eine Authentisierungsanfrage gestellt hat, bevor die Komponenten durch den ersten Kommunikationspartner authentifiziert werden. Hierfür können beispielsweise Verfahren wie Mehrparteien-Signaturen (engl. multi-party signatures) oder Verfahren zum Teilen von Schlüsseln verwendet werden, so wie es beispielsweise in den vorhergehenden Ausführungsbeispielen erläutert wurde.

Wurden die Komponenten durch den ersten Kommunikationspartner erfolgreich authentifiziert, so kann beispielsweise ein Modul, beispielsweise eine Baugruppe oder eine Netzwerkkarte, der jeweiligen authentifizierten Komponenten eingeschaltet werden. Es kann beispielsweise auch eine weitere Komponente des Systems, insbesondere ein Gateway, eingeschaltet werden, die beispielsweise einen Zugriff auf ein Netzwerk erlaubt. Hierzu kann beispielsweise der erste Kommunikationspartner ein Steuersignal bereitstellen.

In einer weiteren Variante werden gesendete Daten von den authentifizierten Komponenten beispielsweise durch den ersten Kommunikationspartner als vertrauenswürdig markiert.

In einer weiteren Variante wird zusätzlich eine Integrität des technischen Systems durch den ersten Kommunikationspartner bestätigt, da insbesondere eine erfolgreiche Authentifizierung nur dann möglich ist, wenn die in der Authentisierungsrichtlinie geforderten Komponenten eine Authentisierungsanfrage gestellt haben.

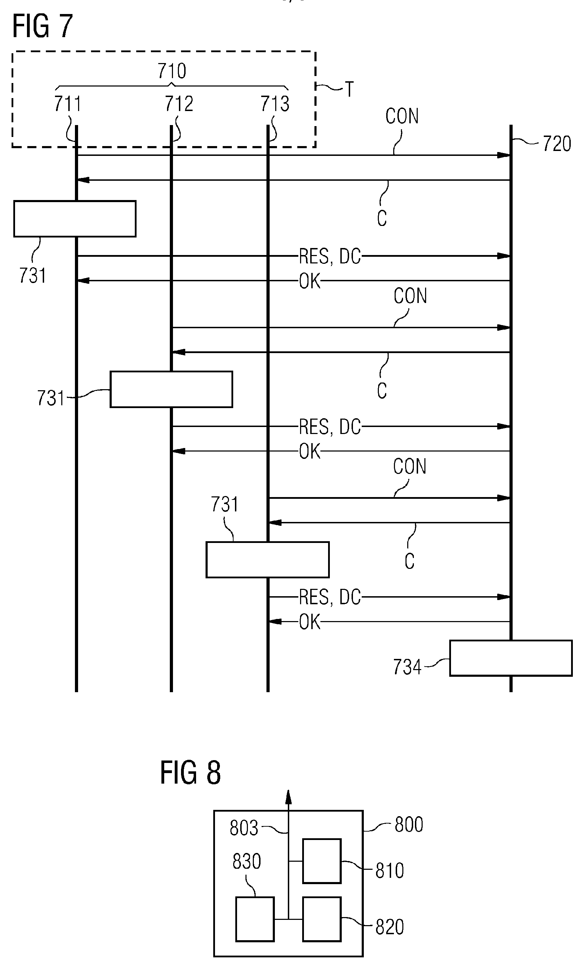

Die Fig. 7 zeigt ein siebtes Ausführungsbeispiels des erfindungsgemäßen Verfahrens zum Authentifizieren von Komponenten eines technischen Systems durch einen ersten Kommunikationspartner. Dieses Ausführungsbeispiel kann beispielsweise eine Implementierungsvariante des Ausführungsbeispiels aus Fig. 6 sein.

Im Einzelnen zeigt die Fig. 7 Komponenten 710, insbesondere eine erste Komponente 711, eine zweite Komponente 712 und eine dritte Komponente 713, eines technischen Systems T, wobei die Komponenten 710 insbesondere zu einer Gruppe von Komponenten zusammengefasst werden können. Die Komponenten senden an einen ersten Kommunikationspartner 720 Verbindungsanfragen, die beispielsweise eine Authentisierungsanfrage umfasst.

Der erste Kommunikationspartner 720 sendet daraufhin eine Aufforderung C an die jeweiligen Komponenten. Die jeweiligen Komponenten verwenden dann ein Geheimnis um eine Antwort RES für die Aufforderung C zu berechnen 731. Das Geheimnis kann beispielsweise ein rekonstruiertes Geheimnis sein, so wie dies in den Fig. 1-5 erläutert wurde, wobei das technische System aus den Fig. 1-5 dann jeweils einer der Komponenten dieses Ausführungsbeispiels entspricht.

Die jeweiligen Komponenten übermitteln dann die Antwort RES und beispielsweise eine der jeweiligen Komponente zugeordneten Kontextinformation DC an den ersten Kommunikationspartner. Ist die Antwort korrekt und wird die Authentisierungsrichtlinie erfüllt, werden die Komponenten authentifiziert und diesen beispielsweise ein Zugriff 734 auf ein Netzwerk ermöglicht oder deren Daten durch den ersten Kommunikationspartner weitergeleitet.

Die Fig. 8 zeigt ein Authentifizierungssystem eines achten Ausführungsbeispiels der Erfindung.

Im Einzelnen zeigt die Fig. 8 ein Authentifizierungssystem 800 zum Authentifizieren von Komponenten eines technischen Systems. Das Authentifizierungssystem 800 umfasst ein erstes Festlegemodul 810, ein viertes Kommunikationsmodul 820 und ein erstes Authentifizierungsmodul 830, die über einen vierten Bus 803 miteinander kommunikativ verbunden sind.

Das erste Festlegemodul 810 ist zum Festlegen einer Authentisierungsrichtlinie für eine Komponente der Komponenten geeignet, wobei die Authentisierungsrichtlinie eine Anzahl der Komponenten des technischen Systems bestimmt, die jeweils eine Authentisierungsanforderung an den ersten Kommunikationspartner zu übermitteln haben, damit eine positive Authentizität durch den ersten Kommunikationspartner bestätigt wird.

Das vierte Kommunikationsmodul 820 ist zum Empfangen einer Authentisierungsanfrage für die Komponente durch den ersten Kommunikationspartner geeignet, wobei die Authentisierungsanfrage von der Komponente erzeugt wurde.

Das erste Authentifizierungsmodul 830 ist zum Authentisieren der Komponente geeignet, wenn die Authentisierungsrichtlinie erfüllt ist.

Das Authentifizierungssystem 800 kann beispielsweise noch zusätzlich einen Prozessor, eine Speichereinheit, ein Eingabegerät, insbesondere eine Computertastatur oder eine Computermaus, und einen Monitor umfassen. Auch kann das Authentifizierungssystem 800 beispielsweise ein Steuermodul umfassen, um ein Steuersignal bereitzustellen, das bei einer erfolgreichen Authentifizierung der/den authentifizierten Komponente/n einen Zugriff auf eine weitere Netzwerkkomponente, beispielsweise ein Gateway, erlaubt, um insbesondere einen Zugriff auf ein weiteres Netzwerk zu erhalten.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

**Patentansprüche**

1. Verfahren zur Konfiguration von Komponenten eines technischen Systems mit den Verfahrensschritten:

   - Bereitstellen (110) eines Geheimnisses in Form einer Zeichenkette, wobei mittels der Zeichenkette eine Authentisierung der Komponenten durchführbar ist;
   - Bereitstellen (120) von mehreren Teilinformationen der Zeichenkette anhand einer Berechnungsvorschrift, wobei

     - die jeweiligen mehreren Teilinformationen anhand eines jeweiligen Teils der Zeichenkette ermittelt werden, und
     - anhand der mehrerer Teilinformationen und eines vordefinierten Kriteriums die Zeichenkette rekonstruierbar ist;

   - Übertragen (130) jeweils einer der mehreren Teilinformationen an jeweils eine der Komponenten, wobei die jeweilige Komponente die Teilinformation speichert.

2. Verfahren nach Anspruch 1, wobei jeweils eine der mehreren Teilinformationen auf mindestens zwei der Komponenten des technischen Systems redundant gespeichert wird.

3. Verfahren nach Anspruch 1 oder 2, wobei beim Breitstellen der mehreren Teilinformationen durch die Berechnungsvorschrift eine Anzahl und/oder Länge der jeweiligen Teilinformationen festlegt wird.

4. Verfahren nach Anspruch 3, wobei durch die Berechnungsvorschrift festlegt wird, dass die Länge eines Anteils jeweils eine der mehreren Teilinformationen an der Zeichenkette durch ein Sicherheitsniveau der Komponenten bestimmt wird, welche die Teilinformation speichern, wobei insbesondere die Länge des Anteils bei einem hohen Sicherheitsniveau länger ist.

5. Verfahren nach Anspruch 3, wobei die Berechnungsvorschrift festlegt, dass die Zeichenkette zu gleichen Anteilen auf die mehreren Teilinformationen aufgeteilt wird.

6. Verfahren zum Bereitstellen eines rekonstruierten Geheimnisses in Form einer Zeichenkette zum rechnergestützten Authentisieren eines technischen Systems und/oder von Komponenten des technischen Systems, wobei das Verfahren nachfolgende Verfahrensschritte umfasst:

   - Übermitteln (150) von mehreren Teilinformationen der Zeichenkette an ein Sicherheitsmodul, wobei

      - die mehreren Teilinformationen in Form jeweils einer Teilinformation durch jeweils eine der Komponenten des technischen Systems übermittelt werden,
      - dem Sicherheitsmodul ein vordefiniertes Kriterium (t) zum Berechnen der Zeichenkette bekannt ist;

   - Rekonstruieren (160) der Zeichenkette durch das Sicherheitsmodul anhand der mehrerer Teilinformationen und des vordefinierten Kriteriums;
   - Bereitstellen (170) der rekonstruierten Zeichenkette durch das Sicherheitsmodul.

7. Verfahren nach Anspruch 6, wobei das vordefinierte Kriterium eine vordefinierte Anzahl von Teilinformationen umfasst.

8. Verfahren nach Anspruch 6 oder 7, wobei durch das vordefinierte Kriterium eine Sicherheitsbedingung festgelegt wird, wobei die Zeichenkette erst dann rekonstruiert werden kann, wenn die Sicherheitsbedingung erfüllt ist.

9. Verfahren nach Anspruch 8, wobei durch die Sicherheitsbedingung festgelegt wird, dass die Teilinformationen einer spezifischen Komponente der Komponenten an das Sicherheitsmodul übermittelt wurde.

10. Verfahren nach einem der Ansprüche 6 - 9, wobei durch das Sicherheitsmodul mittels eines Kryptomoduls eine Korrektheit der rekonstruierten Zeichenkette festgestellt wird.

11. Verfahren nach einem der Ansprüche 6 - 11, wobei die Teilinformationen jeweils eine Zuordnungsinformation zum Rekonstruieren der Zeichenkette umfassen.

12. Verfahren nach einem der Ansprüche 6 - 11, wobei die rekonstruierte Zeichenkette den Komponenten bereitgestellt wird, die eine der Teilinformationen übermittelt haben.

13. Komponente, aufweisend:

   - eine erste Speichereinheit zum Speichern einer jeweiligen Teilinformation von mehreren Teilinformationen eines Geheimnisses im Form einer Zeichenkette, wobei

      - die jeweilige der Teilinformationen anhand eines Teils Zeichenkette ermittelbar ist,
      - die Zeichenkette anhand der mehrerer Teilinformationen von weiteren Komponenten und eines vordefinierten Kriteriums rekonstruierbar ist,
      - mittels der Zeichenkette eine Authentisierung der Komponente und/oder eines technisches Systems, das die Komponente aufweist, durchführbar ist;

   - ein erstes Kommunikationsmodul zum Senden einer Anfrage zum Bereitstellen der Zeichenkette, wobei die Anfrage die jeweilige Teilinformation der Komponente umfasst.

14. Sicherheitsmodul zum Rekonstruieren eines Geheimnisses in Form einer Zeichenkette zum rechnergestützten Authentisieren eines technischen Systems und/oder von Komponenten des technischen Systems, aufweisend:

- ein zweites Kommunikationsmodul zum Empfangen von mehreren Teilinformationen der Zeichenkette, wobei die jeweiligen Teilinformationen durch jeweils eine der Komponenten des technischen Systems übermittelbar sind,
- eine zweite Speichereinheit zum Speichern eines vordefinierten Kriteriums über die mehreren Teilinformationen der Zeichenkette;
- ein erstes Rekonstruktionsmodul zum Rekonstruieren der Zeichenkette anhand der mehrerer Teilinformationen und des vordefinierten Kriteriums;
- ein erstes Bereitstellungsmodul zum Bereitstellen der rekonstruierten Zeichenkette.

**15.** Sicherheitsmodul nach Anspruch 14, wobei das Sicherheitsmodul zumindest ein weiteres Modul zur Durchführung des Verfahrens nach einem der Ansprüche 7 - 12 umfasst.

**16.** Konfigurationsvorrichtung zum Konfigurieren einer Komponente eines technischen Systems aufweisend:

- ein zweites Bereitstellungsmodul zum Bereitstellen eines Geheimnisses in Form einer Zeichenkette, wobei mittels der Zeichenkette eine Authentisierung der Komponenten durchführbar ist;
- ein drittes Bereitstellungsmodul zum Bereitstellen von mehreren Teilinformationen der Zeichenkette anhand einer Berechnungsvorschrift, wobei

- die jeweiligen mehreren Teilinformationen anhand eines jeweiligen Teils der Zeichenkette ermittelt werden, und
- anhand der mehrerer Teilinformationen und eines vordefinierten Kriteriums die Zeichenkette rekonstruierbar ist;

- ein drittes Kommunikationsmodul zum Übertragen jeweils einer der mehreren Teilinformationen an jeweils eine der Komponenten, wobei die jeweilige Komponente die Teilinformation speichert.

**17.** Verfahren zum Authentifizieren von Komponenten eines technischen Systems durch einen ersten Kommunikationspartner mit den Verfahrensschritten:

- Festlegen einer Authentisierungsrichtlinie für eine Komponente der Komponenten, wobei die Authentisierungsrichtlinie eine Anzahl der Komponenten des technischen Systems bestimmt, die jeweils eine Authentisierungsanforderung an den ersten Kommunikationspartner zu übermitteln haben, damit eine positive Authentizität durch den ersten Kommunikationspartner bestätigt wird;
- Empfangen einer Authentisierungsanfrage für die Komponente durch den ersten Kommunikationspartner, wobei die Authentisierungsanfrage von der Komponente erzeugt wurde;
- Authentifizieren der Komponente, wenn die Authentisierungsrichtlinie erfüllt ist.

**18.** Verfahren nach Anspruch 17, wobei eine rekonstruierte Zeichenkette einem der Ansprüche 6 - 12 bereitgestellt wird, wobei die rekonstruierte Zeichenkette zum Erzeugen der Authentisierungsanfrage verwendet wird.

**19.** Authentifizierungssystem zum Authentifizieren von Komponenten eines technischen Systems aufweisend:

- ein erstes Festlegemodul zum Festlegen einer Authentisierungsrichtlinie für eine Komponente der Komponenten, wobei die Authentisierungsrichtlinie eine Anzahl der Komponenten des technischen Systems bestimmt, die jeweils eine Authentisierungsanforderung an den ersten Kommunikationspartner zu übermitteln haben, damit eine positive Authentizität durch den ersten Kommunikationspartner bestätigt wird;
- ein viertes Kommunikationsmodul zum Empfangen einer Authentisierungsanfrage für die Komponente durch den ersten Kommunikationspartner, wobei die Authentisierungsanfrage von der Komponente erzeugt wurde;
- ein erstes Authentifizierungsmodul zum Authentisieren der Komponente, wenn die Authentisierungsrichtlinie erfüllt ist.

**20.** Computerprogrammprodukt mit Programmbefehlen zur Durchführung des Verfahrens nach einem der Ansprüche 1 - 5 und/oder zur Durchführung des Verfahrens nach einem der Ansprüche 6 - 12.

**21.** Computerprogrammprodukt mit Programmbefehlen für ein Erstellungsgerät, das mittels der Programmbefehle konfiguriert wird, die Komponente nach Anspruch 13 und/oder das Sicherheitsmodul nach Anspruch 14 und/oder die Konfigurationsvorrichtung nach Anspruch 16 und/oder das Authentifizierungssystem nach Anspruch 19 zu erstellen.

22. Bereitstellungsvorrichtung für das Computerprogrammprodukt nach Anspruch 20 oder 21, wobei die Bereitstellungsvorrichtung das Computerprogrammprodukt speichert und/oder bereitstellt.

## FIG 1A

110

120

130

## FIG 1B

150

160

180

## FIG 2

C  RES

T

240

220

300A  $X_1, S_1$

300B  $X_2, S_2$

210

300C  $X_3, S_3$

300D  $X_4, S_4$

S

E
0

230

FIG 3

303 — 300
320   310

FIG 4

403 — 220
430   410
420

FIG 5

504
513 — 500
530   510
520
300

FIG 6

610
620
630

## FIG 7

710

711    712    713

T

CON

720

C

731

RES, DC

OK

CON

C

731

RES, DC

OK

CON

731

C

RES, DC

OK

734

## FIG 8

803    800

830    810

820

Europäisches Patentamt
European Patent Office
Office européen des brevets

# EUROPÄISCHER RECHERCHENBERICHT

Nummer der Anmeldung

EP 16 17 2887

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YINGLI ZENG ET AL: "A key escrow scheme to IOT based on Shamir", 2013 INTERNATIONAL CONFERENCE ON COMMUNICATIONS, CIRCUITS AND SYSTEMS (ICCCAS), IEEE, Bd. 2, 15. November 2013 (2013-11-15), Seiten 94-97, XP032578377, DOI: 10.1109/ICCCAS.2013.6765293 [gefunden am 2014-03-11] * das ganze Dokument * | 1-16, 20-22 | INV. H04L9/08 ADD. H04L29/06 H04W4/00 H04L29/08 H04W12/04 H04W12/06 |
| X | KILINÇ GÖRKEM ET AL: "Distributed Identity Based Private Key Generation for SCADA Systems", 17. September 2012 (2012-09-17), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 118 - 129, XP047043634, ISSN: 0302-9743 ISBN: 978-3-642-34690-3 * das ganze Dokument * | 1-16, 20-22 | |
| A | US 2014/044265 A1 (KOCHER PAUL CARL [US] ET AL) 13. Februar 2014 (2014-02-13) * das ganze Dokument * | 1-16, 20-22 | RECHERCHIERTE SACHGEBIETE (IPC) H04L H04W |
| X | US 7 194 628 B1 (GUTHERY SCOTT B [US]) 20. März 2007 (2007-03-20) * das ganze Dokument * | 17-19 | |
| X | EP 2 566 204 A1 (CHINA MOBILE COMM CORP [CN]) 6. März 2013 (2013-03-06) * Absätze [0005], [0043] - [0103] * * Abbildungen 1-7 * | 17-19 | |

Der vorliegende Recherchenbericht wurde für alle Patentansprüche erstellt

| Recherchenort | Abschlußdatum der Recherche | Prüfer |
|---|---|---|
| München | 16. Dezember 2016 | Ghomrasseni, Z |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

Nummer der Anmeldung

EP 16 17 2887

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 16 17 2887

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-16, 20-22

   Verfahren, Vorrichtungen und Computerprogrammprodukte zur Konfiguration von Komponenten eines technischen Systems mit Teilinformationen einer Authentisierungszeichenkette und zur Rekonstuktion der Authentisierungszeichenkette anhand diese Teilinformationen.

   ---

2. Ansprüche: 17-19

   Verfahren und System zum authentifizieren von Komponenten eines technischen Systems mittels einer Authentisierungsrichtlinie.

   ---

**ANHANG ZUM EUROPÄISCHEN RECHERCHENBERICHT
ÜBER DIE EUROPÄISCHE PATENTANMELDUNG NR.**

EP 16 17 2887

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-12-2016

| Im Recherchenbericht angeführtes Patentdokument | Datum der Veröffentlichung | Mitglied(er) der Patentfamilie | Datum der Veröffentlichung |
|---|---|---|---|
| US 2014044265 A1 | 13-02-2014 | CN 104541474 A | 22-04-2015 |
| | | EP 2907262 A2 | 19-08-2015 |
| | | JP 2015531924 A | 05-11-2015 |
| | | KR 20150040920 A | 15-04-2015 |
| | | TW 201415286 A | 16-04-2014 |
| | | US 2014044265 A1 | 13-02-2014 |
| | | US 2016028722 A1 | 28-01-2016 |
| | | WO 2014026095 A2 | 13-02-2014 |
| US 7194628 B1 | 20-03-2007 | KEINE | |
| EP 2566204 A1 | 06-03-2013 | CN 102238146 A | 09-11-2011 |
| | | EP 2566204 A1 | 06-03-2013 |
| | | US 2013046983 A1 | 21-02-2013 |
| | | WO 2011134395 A1 | 03-11-2011 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 8531247 B2
- US 8892616 B2
- US 8300811 B2
- US 9147088 B2
- EP 2605445 B1
- EP 2870565 A1
- EP 2891102 A1
- US 8843761 B2